# EUROPEAN PATENT SPECIFICATION

(11) **EP 2 075 161 B1**
(45) Date of publication and mention of the grant of the patent: **11.08.2010**
(21) Application number: 07425833.6
(22) Date of filing: 28.12.2007
(51) Int. Cl.: B60R 11/02, H04B 10/10, H04B 1/38

(54) **Improvements in telematics equipment on board a vehicle**
Verbesserungen an Telematiksystemen an Bord eines Fahrzeuges
Améliorations en systèmes télématiques à bord d'un véhicule

(43) Date of publication of application: 01.07.2009
(73) Proprietor: Magneti Marelli S.p.A., 20011 Corbetta (MI) (IT)
(72) Inventor: Pirra, Giorgio, 10078 Venaria (Torino) (IT); Caser, Enrico, 10078 Venaria (Torino) (IT)
(74) Representative: Deambrogi, Edgardo

(56) References cited:
- EP-A- 1 127 746
- US-A- 5 239 700
- US-A1- 2007 185 631
- US-B1- 6 526 335

## Description

The present invention relates in general to integrated telematics systems on board vehicles, and more specifically to integrating an onboard telematics platform with external devices, such as radio broadcast signal receiver/decoder devices, installed on board the vehicle, but which can be controlled autonomously by the onboard telematics platform.

An onboard telematics platform integrates, in an original equipment system, information and entertainment telematics devices such as radio tuners, digital data carrier readers, telephony equipment and navigation systems. The equipment items are presented on a local network (for example I2C/I2S, ATAPI, etc.) and are controlled via a common user interface, which makes available direct input devices (keyboard and/or touch-screens on a front panel, voice recognizer) and direct output devices (screen, voice synthesizer) for commands and data, or indirect input/output devices, such as for example steering-wheel controls and repetition on the instrument panel.

The interface also comprises infrared receiver-transmitter means for transferring data between a communication or personal assistance device (for example, a mobile phone) and the onboard telematics platform according to the IrDA transmission protocol.

In a vehicle in which a device external to the telematics platform is installed, such as a radio broadcast signal receiver/decoder device, for example a DVB receiver/decoder (DVB-H, DVB-T), the external device is generally placed beside the onboard telematics system with which it only partly shares the user interface resources, for example the video interface (screen) as output, while to control it a dedicated remote control is often used which interfaces directly with the device via infrared signals according to the RC5 protocol.

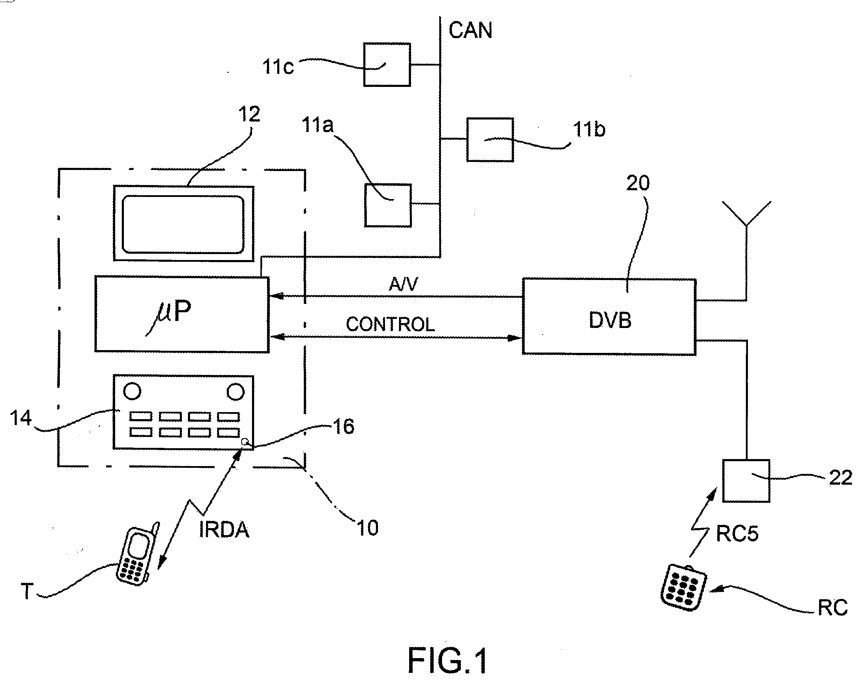

Figure 1 represents the prior art configuration. The label 10 indicates as a whole an onboard info-telematic node comprising a microprocessor unit arranged to manage the onboard information and entertainment telematics devices 11a-11c, and in particular their user-interface. Associated with the node 10 are video interface means 12, such as a screen which can be remote or incorporated in an equipment item presented on the vehicle dashboard, input interface means 14 comprising a keyboard and/or one or more ring or knob type selectors, and infrared receiver-transmitter means 16 operating according to the IrDA standard protocol and adapted to exchange command and data signals with a personal information and telecommunication device T (smartphones, PDAs, portable navigators, digital format music track players, to cite a few examples) carried by the owner himself on board the vehicle, in order to continue to make use of them, while observing driving safety conditions, in conjunction with the telematics platform

A device external to the onboard telematics platform, such as a DVB receiver/decoder, is identified by the label 20. It is connected to the info-telematic node 10 via an electrical connection for the exchange of basic control signals (for example, on/off signals) and power, and is connected to the onboard audio/video interface 12 for the transmission of audio/video signals.

The device 20 has its own infrared receiver means 22, integrated or remote, operating according to the RC5 standard protocol for receiving command signals forwarded by a remote control device RC available to the user.

The RC5 standard data transmission protocol has been developed for a robust transmission, with a low data-frame speed, in which one data word is made up of 14 bits, of which a pair of start bits is for the adjustment of the gain of the automatic gain control device in the infrared receiver circuit, one toggle bit is for indicating the press state of the control key, five address bits are for identifying the equipment intended to be commanded, and six bits correspond to the actual command information. The frame is encoded according to a biphase signal structure, i.e. a high level is transmitted via a leading edge of a pulse and a low level via a trailing edge of a pulse. Each bit is encoded by a pulse having a duration of 1.778 ms.

The RC5 communication standard is different from the IrDA standard, which has a different frame and a bit transmission speed that is higher by two orders of magnitude but is less robust, requiring the remote control device to be in closer proximity to the receiver.

In the case of such a system, both the infrared receiver-transmitter means of the onboard integrated telematics platform and of the autonomous receiver/decoder device, external to the platform, must be made available on the dashboard, in optically visible positions. This ultimately involves higher costs of installation and/or arrangement on board a vehicle, even with regard to observing the overall ergonomics of the integrated system.

An object of the present invention is to provide an onboard integrated telematics system which avoids the drawbacks of the prior art, in particular one which optimizes the user interface in the connection with autonomous onboard devices external to the telematics platform.

According to the present invention, such an aim is achieved by virtue of an onboard integrated telematics system having the features claimed in Claim 1.

Particular embodiments form subjects of the dependent claims.

In summary, the present invention is based on the principle of using the infrared receiver means made available by the onboard integrated platform to interface also with the remote control device of the information and entertainment device external to the telematics platform.

Further advantages and features of the present invention will become clear from the following detailed description which is given with reference to the appended drawings which are provided purely by way of non-limiting example and in which:
Figure 1 is a schematic representation of an onboard telematics system comprising a receiver/decoder device that is autonomous with respect to the onboard integrated telematics platform, according to the prior art; and
Figure 2 is a schematic representation of the architecture of an onboard telematics system comprising a receiver/decoder device that is autonomous with respect to the onboard integrated telematics platform, according to the invention.

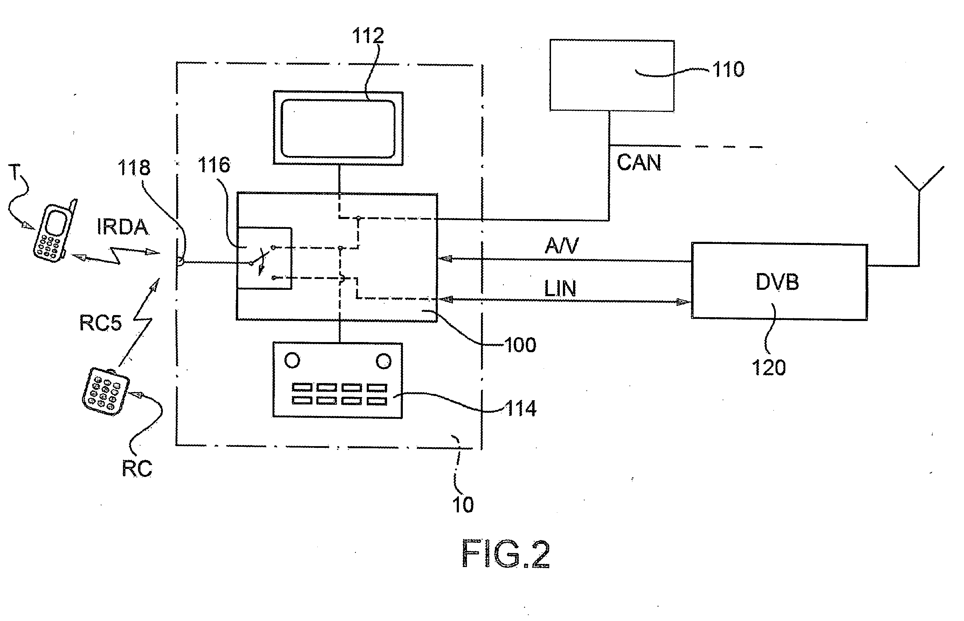

In Figure 2, the label 100 indicates a microprocessor unit for managing an onboard info-telematic node, which can be connected to at least one onboard integrated equipment item 110, such as for example the instrument panel or the body computer, presented on a CAN network, and to a device 120 that is external to the onboard telematics platform, such as a radio broadcast signal receiver/decoder unit, for example a DVB-H or DVB-T receiver/decoder, via a LIN serial connection and an A/V connection.

The microprocessor unit 100 is connected to means for interfacing with a user, the means comprising at least one screen 112, to which the microprocessor unit 100 is connected directly or via a graphics coprocessor module, and a keyboard or similar interface 114 for entering commands, possibly both arranged on a single front panel placed in the dashboard, in a position that is visible and easily reachable while observing the common rules of ergonomics.

A single infrared receiver-transmitter module 116, associated with an infrared signal electro-optical converter 118 arranged, for example, on the interface front panel of the info-telematic node, is connected to the microprocessor unit 100 and is adapted to operate alternately according to an RC5 or IrDA protocol.

The microprocessor is arranged, depending on the active context selected by the user (for example with activation by means of a selector button integrated in the interface 114 or interactive screen), to recognize the transmission protocol for the commands or data received at the module 116, and to operate as a logic switch between the various IrDA and RC5 infrared signal transmission contexts, in order to forward the commands or data received according to the RC5 protocol to the device 120 on the serial line (LIN bus) already available for the transmission of basic commands, and in order to forward the commands or data received according to the IrDA protocol, respectively.

Preferably, the microprocessor unit 100 comprises an infrared receiver-transmitter module 116 able to receive/transmit signals according to the IrDA protocol and is arranged to execute an application program to adapt the module 116 to decode signals according to the RC5 protocol.

The microprocessor unit 100 for managing the onboard info-telematic node is adapted to assume a role of master unit on a point-to-point connection with the external device 120. Provision is made for an asynchronous handshaking procedure so that the line can be used by a command signal according to the RC5 protocol, and for a periodic check of the state of the external device 120 by the microprocessor unit.

In detail, the microprocessor unit 100 is arranged to generate and transmit to the device 120 a connection request signal together with an instruction (for example, the command issued by the remote control device RC), preferably according to a TLV (Tag, Length, Value) protocol including a field (1 byte) identifying the type of instruction, a field (1 byte) identifying the length of the instruction (for example, 0 if the instruction is a state request) and a field (n bytes, dependent on the data in the length field) for transmitting the sequence of commands issued (or data supplied) by pressing the keys on the remote control RC. The external device is adapted to interpret the connection request signal and respond by sending a positive or negative confirmation message, in the case of successful or failed execution, respectively.

Similarly, a signal received at the unit 100 from an equipment item 110 can be interpreted as an asynchronous interrupt, as a result of which the unit 100 suspends the current connection with the device 120 and starts a different process, for example restoring the display of a navigation map after movement of the car is detected.

Advantageously, according to the invention it is not necessary to provide a pair of specific infrared detcctors/transmitters, a first for the onboard telematics system operating with the IrDA protocol and a second for the receiver/decoder equipment operating with the RC5 protocol, respectively, both set up in positions that are optically visible and reachable by a consumer device or remote control device held by a user. An integrated telematics system according to the invention provides for making use of only one infrared electro-optical converter, saving space on the onboard interface front panel and facilitating the orienting of devices held by a user for transmitting commands to onboard devices.

Naturally, the principle of the invention remaining the same, the forms of embodiment and details of construction may be varied widely with respect to those described and illustrated purely by way of non-limiting example, without thereby departing from the scope of protection of the present invention, which scope of protection is defmed by the appended claims.

## Claims

1. An onboard integrated telematics system for a vehicle, including:
- an onboard telematics platform (10), adapted to manage and/or control a plurality of information and entertainment telematics equipment items (11a-11c; 110) presented on an onboard CAN communication network,
in which the platform comprises:
- input/output user-interface means (12, 14; 112, 114); and
- infrared receiver-transmitter means (16; 116, 118) adapted to receive or send command and data signals from/to communication or personal assistance electronic devices (T) present in the cabin via a first communication protocol; and
- at least one information and entertainment device (20; 120) external to the telematics platform (10) and installed on board the vehicle, adapted to share the user-interface means (12, 14; 112, 114) of the platform (10), which device (20; 120) has associated infrared remote control means (RC) adapted to transmit to the device (20; 120) command and data signals via a second communication protocol,
**characterized in that** the infrared receiver-transmitter means (116, 118) of the onboard telematics platform (10) are adapted to receive the command and data signals to be conveyed to the at least one device (120) external to the platform, which signals originate from the associated remote control means (RC) via the second communication protocol, and
**in that** the telematics platform (10) comprises:
- electronic processing means arranged to recognize the transmission protocol of the infrared signals received; and
- logic switch means (116) arranged to assume a first operating configuration, in which they are adapted to forward the commands or data received via the first transmission protocol for transmitting at the interface means (112, 114) coherently to at least one onboard telematics equipment item (110) presented on the CAN network, and a second operating configuration, in which they are adapted to forward the commands or data received via the second transmission protocol to the device (120) that is external to the telematics platform.

2. A system according to Claim 1, comprising operating mode selector means that can be operated by the user, the electronic processing means being arranged to recognize the transmission protocol of the received infrared signals based on the context defined by the selector means.

3. A system according to either Claim 1 or Claim 2, in which the onboard telematics platform (10) comprises an electronic control unit (100) adapted to assume the role of master in a point-to-point connection with the device (120) that is external to the platform (10).

4. A system according to Claim 3, in which the control unit (100) is arranged to execute an asynchronous handshaking procedure with the external device (120) for the transmission of commands and data to the device (120).

5. A system according to either Claim 3 or Claim 4, in which the control unit (100) is arranged to execute a periodic procedure querying the operating state of the external device (120).

6. A system according to Claim 3, Claim 4 or Claim 5, in which the control unit (100) is arranged to:
- generate and transmit to the external device (120) a connection request signal together with an instruction compiled according to a TLV protocol including a field identifying the type of instruction, a field identifying the length of the instruction and a field for transmitting the instruction, in which the instruction is one of a) a state request, b) a command issued by the remote control means (RC) of the device (120), c) an item of data supplied by the remote control means (RC) of the device (120); and
- receive from the external device (120) a confirmation message indicating the state of the device (120), the outcome of the execution of the command or the reception of the item of data.

7. A system according to Claim 6, in which the control unit (100) is arranged to receive a signal from an onboard equipment item (110) presented on the CAN network and to interpret such a signal as an asynchronous interrupt signal for interrupting the current connection with the external device (120).

8. A system according to any one of the preceding claims, in which the information and entertainment device (120) external to the telematics platform (10) is a radio broadcast signal receiver/decoder device.

9. A system according to Claim 8, in which the receiver/decoder device is a DVB receiver/decoder.

10. A system according to any one of the preceding claims, in which the device (120) external to the telematics platform (10) is connected to the platform via a LIN serial connection.

11. A system according to any one of the preceding claims, in which the first communication protocol is an IrDA communication protocol.

12. A system according to any one of the preceding claims, in which the second communication protocol is an RC5 communication protocol.

## Patentansprüche

1. Bordinternes integriertes Telematiksystem für ein Fahrzeug, das umfasst:
- eine bordinterne Telematikplattform (10), die dazu ausgelegt ist, mehrere Informations- und Unterhaltungs-Telematikanlagenelemente (11a-11c; 110), die in einem bordinternen CAN-Kommunikationsnetz angeboten werden, zu managen und/oder zu steuern,
wobei die Plattform umfasst:
- Eingabe/Ausgabe-Anwenderschnittstellenmittel (12, 14; 112, 114); und
- Infrarot-Empfänger/Sender-Mittel (16; 116, 118), die dazu ausgelegt sind, Befehls- und Datensignale von/zu elektronischen Kommunikationsvorrichtungen oder persönlichen Assistenzvorrichtungen (T), die im Fahrgastraum vorhanden sind, über ein erstes Kommunikationsprotokoll zu empfangen bzw. zu senden; und
- wenigstens eine Informations- und Unterhaltungsvorrichtung (20; 120) außerhalb der Telematikplattform (10), die an Bord des Fahrzeugs installiert ist und dazu ausgelegt ist, die Anwenderschnittstellenmittel (12, 14; 112, 114) der Plattform (10) mit zu benutzen, wobei der Vorrichtung (20; 120) Infrarot-Fernsteuermittel (RC) zugeordnet sind, die dazu ausgelegt sind, zu der Vorrichtung (20; 120) Befehls- und Datensignale über ein zweites Kommunikationsprotokoll zu senden,
**dadurch gekennzeichnet, dass** die Infrarot-Empfänger/Sender-Mittel (116, 118) der bordinternen Telematikplattform (10) dazu ausgelegt sind, die Befehls- und Datensignale, die zu der wenigstens einen Vorrichtung (120) außerhalb der Plattform transportiert werden sollen, zu empfangen, wobei die Signale über das zweite Kommunikationsprotokoll von den zugeordneten Fernsteuermitteln (RC) ausgehen, und
dass die Telematikplattform (10) umfasst:
- elektronische Verarbeitungsmittel, die dazu ausgelegt sind, das Übertragungsprotokoll der empfangenen Infrarotsignale zu erkennen; und
- Logikschaltmittel (116), die dazu ausgelegt sind, eine erste Betriebskonfiguration anzunehmen, in der sie dazu ausgelegt sind, die Befehle oder Daten, die über das erste Übertragungsprotokoll für die Übertragung bei den Schnittstellenmitteln (112, 114) empfangen werden, kohärent zu wenigstens einem bordinternen Telematikanlagen-Element (110), das in dem CAN-Netz vorhanden ist, weiterzuleiten, und eine zweite Betriebskonfiguration anzunehmen, in der sie dazu ausgelegt sind, die Befehle oder Daten, die über das zweite Übertragungsprotokoll empfangen werden, zu der Vorrichtung (120) außerhalb der Telematikplattform weiterzuleiten.

2. System nach Anspruch 1, das Betriebsart-Wählmittel enthält, die durch den Anwender betätigt werden können, wobei die elektronischen Verarbeitungsmittel dazu ausgelegt sind, das Übertragungsprotokoll der empfangenen Infrarotsignale anhand des durch die Wählmittel definierten Kontexts zu erkennen.

3. System nach Anspruch 1 oder Anspruch 2, wobei die bordinterne Telematikplattform (10) eine elektronische Steuereinheit (100) umfasst, die dazu ausgelegt ist, die Rolle eines Masters in einer Punkt-zu-Punkt-Verbindung mit der Vorrichtung (120) außerhalb der Plattform (10) anzunehmen.

4. System nach Anspruch 3, wobei die Steuereinheit (100) dazu ausgelegt ist, eine asynchrone Handshake-Prozedur mit der äußeren Vorrichtung (120) für die Übertragung von Befehlen und von Daten zu der Vorrichtung (120) auszuführen.

5. System nach Anspruch 3 oder Anspruch 4, wobei die Steuereinheit (100) dazu ausgelegt ist, eine periodische Prozedur auszuführen, die den Betriebszustand der externen Vorrichtung (120) abfragt.

6. System nach Anspruch 3, Anspruch 4 oder Anspruch 5, wobei die Steuereinheit (100) dazu ausgelegt ist:
- zu der externen Vorrichtung (120) ein Verbindungsanforderungssignal zusammen mit einem Befehl, der in Übereinstimmung mit einem TLV-Protokoll kompiliert ist und ein Feld, das den Befehlstyp identifiziert, ein Feld, das die Länge des Befehls identifiziert, und ein Feld für die Übertragung des Befehls enthält, zu erzeugen und zu senden, wobei der Befehl entweder a) eine Zustandsanforderung oder b) ein von den Fernsteuermitteln (RC) der Vorrichtung (120) ausgegebener Befehl oder c) ein Datenelement, das von den Fernsteuermitteln (RC) der Vorrichtung (120) geliefert wird, ist; und
- von der externen Vorrichtung (120) eine Bestätigungsnachricht zu empfangen, die den Zustand der Vorrichtung (120), das Ergebnis der Ausführung des Befehls oder den Empfang des Datenelements angibt.

7. System nach Anspruch 6, wobei die Steuereinheit (100) dazu ausgelegt ist, ein Signal von einem bordinternen Anlagenelement (110), das in dem CAN-Netz vorhanden ist, zu empfangen und ein solches Signal als ein asynchrones Unterbrechungssignal für die Unterbrechung der momentanen Verbindung mit der externen Vorrichtung (120) zu interpretieren.

8. System nach einem der vorhergehenden Ansprüche, wobei die Informations- und Unterhaltungsvorrichtung (120) außerhalb der Telematikplattform (10) eine Rundfunksignal-Empfänger-/-Decodierervorrichtung ist.

9. System nach Anspruch 8, wobei die Empfänger/Decodierervorrichtung ein DVB-Empfänger/Decodierer ist.

10. System nach einem der vorhergehenden Ansprüche, wobei die Vorrichtung (120) außerhalb der Telematikplattform (10) mit der Plattform über eine serielle LIN-Verbindung verbunden ist.

11. System nach einem der vorhergehenden Ansprüche, wobei das erste Kommunikationsprotokoll ein IrDA-Kommunikationsprotokoll ist.

12. System nach einem der vorhergehenden Ansprüche, wobei das zweite Kommunikationsprotokoll ein RC5-Kommunikationsprotokoll ist.

## Revendications

1. Système télématique intégré embarqué pour un véhicule, comprenant:
- une plate-forme télématique embarquée (10), conçue pour gérer et/ou contrôler une pluralité d'informations et d'éléments d'équipements télématiques de divertissement (11a-11c; 110) présentés sur un réseau de communication CAN embarqué,
dans lequel la plate-forme comprend:
- des moyens d'interface utilisateur d'entrée/sortie (12,14; 112,114); et
- des moyens d'émetteur-récepteur infrarouge (16; 116, 118) conçus pour recevoir ou envoyer des signaux de commande et de données depuis/vers des dispositifs électroniques (T) de communication ou d'assistance personnelle présents dans la cabine via un premier protocole de communication; et
- au moins un dispositif d'informations et de divertissement (20; 120) externe à la plate-forme télématique (10) et installé à bord du véhicule, conçu pour partager les moyens d'interface d'utilisateur (12, 14; 112, 114) de la plate-forme (10), lequel dispositif (20; 120) est doté de moyens de commande à distance (RC) infrarouges associés conçus pour transmettre au dispositif (20; 120) des signaux de commande et de données via un second protocole de communication,
**caractérisé en ce que** les moyens d'émetteur-récepteur infrarouges (116, 118) de la plate-forme télématique embarquée (10) sont conçus pour recevoir les signaux de commande et de données devant être acheminés vers l'au moins un dispositif (120) externe à la plate-forme, lesquels signaux proviennent des moyens de commande à distance (RC) associés via le second protocole de communication, et
**en ce que** la plate-forme télématique (10) comprend:
- des moyens de traitement électroniques conçus pour reconnaître le protocole de transmission des signaux infrarouges reçus; et
- des moyens de commutation logique (116) conçus pour prendre une première configuration opérationnelle, dans laquelle ils sont conçus pour transmettre les commandes ou les données reçues via le premier protocole de transmission pour transmission au niveau des moyens d'interface (112, 114) de manière cohérente vers au moins un élément d'équipement télématique embarqué (110) présenté sur le réseau CAN, et une seconde configuration opérationnelle, dans laquelle ils sont conçus pour transmettre les commandes ou les données reçues via le second protocole de transmission au dispositif (120) qui est externe à la plate-forme télématique.

2. Système selon la revendication 1, comprenant des moyens de sélecteur de mode opérationnel qui peuvent être actionnés par l'utilisateur, les moyens de traitement électronique étant conçus pour reconnaître le protocole de transmission des signaux infrarouges reçus sur la base du contexte défini par les moyens de sélecteur.

3. Système selon la revendication 1 ou la revendication 2, dans lequel la plate-forme télématique embarquée (10) comprend une unité de commande électronique (100) conçue pour prendre le rôle de maître dans une connexion point à point avec le dispositif (120) qui est externe à la plate-forme (10).

4. Système selon la revendication 3, dans lequel l'unité de commande (100) est conçue pour exécuter une procédure d'établissement de liaison asynchrone avec le dispositif externe (120) pour la transmission des commandes et des données au dispositif (120).

5. Système selon la revendication 3 ou la revendication 4, dans lequel l'unité de commande (100) est conçue pour exécuter une procédure périodique interrogeant l'état opérationnel du dispositif externe (120).

6. Système selon la revendication 3, la revendication 4 ou la revendication 5, dans lequel l'unité de commande (100) est conçue pour:
- générer et transmettre au dispositif externe (120) un signal de requête de connexion conjointement avec une instruction compilée selon un protocole TLV comprenant un champ identifiant le type d'instruction, un champ identifiant la longueur de l'instruction et un champ pour transmettre l'instruction, l'instruction étant une instruction parmi a) une requête d'état, b) une commande émise par les moyens de commande à distance (RC) du dispositif (120), c) un élément de données fourni par les moyens de commande à distance (RC) du dispositif (120); et
- recevoir du dispositif externe (120) un message de confirmation indiquant l'état du dispositif (120), le résultat de l'exécution de la commande ou la réception de l'élément de données.

7. Système selon la revendication 6, dans lequel l'unité de commande (100) est conçue pour recevoir un signal d'un élément d'équipement embarqué (110) présenté sur le réseau CAN et pour interpréter un tel signal comme un signal d'interruption asynchrone destiné à interrompre la connexion en cours avec le dispositif externe (120).

8. Système selon l'une quelconque des revendications précédentes, dans lequel le dispositif d'information et de divertissement (120) externe à la plate-forme télématique (10) est un dispositif de récepteur/décodeur de signaux de radiodiffusion.

9. Système selon la revendication 8, dans lequel le dispositif de récepteur/décodeur est un récepteur/décodeur de radiodiffusion vidéonumérique.

10. Système selon l'une quelconque des revendications précédentes, dans lequel le dispositif (120) externe à la plate-forme télématique (10) est connecté à la plate-forme via une prise série LIN.

11. Système selon l'une quelconque des revendications précédentes, dans lequel le premier protocole de communication est un protocole de communication IrDA.

12. Système selon l'une quelconque des revendications précédentes, dans lequel le second protocole de communication est un protocole de communication RC5.
